# EUROPEAN PATENT SPECIFICATION

(11) **EP 3 786 764 B1**
(45) Date of publication and mention of the grant of the patent: **23.11.2022**
(21) Application number: 19193798.6
(22) Date of filing: 27.08.2019
(51) Int. Cl.: G06F 3/01, B60K 35/00, G06V 20/56

(54) **METHOD AND LOCALIZATION DEVICE FOR LOCALIZING AN IMAGE SENSOR MOUNTED ON A VEHICLE**
VERFAHREN UND LOKALISIERUNGSVORRICHTUNG ZUR LOKALISIERUNG EINES AUF EINEM FAHRZEUG MONTIERTEN BILDSENSORS
PROCÉDÉ ET DISPOSITIF DE LOCALISATION POUR LOCALISER UN CAPTEUR D'IMAGE MONTÉ SUR UN VÉHICULE

(43) Date of publication of application: 03.03.2021
(73) Proprietor: Aptiv Technologies Limited, St. Michael (BB)
(72) Inventor: Komorkiewicz, Mateusz, 30-798 Kraków (PL)
(74) Representative: Manitz Finsterwald Patent- und Rechtsanwaltspartnerschaft mbB

(56) References cited:
- US-A1- 2016 018 889
- US-A1- 2016 134 863
- US-A1- 2016 267 336
- US-A1- 2017 001 648

## Description

### FIELD

The present disclosure relates to a method and a localization device for localizing an image sensor mounted on a vehicle by means of an environment sensor.

### BACKGROUND

Camera-based driver-monitoring systems have been developed to monitor the driver's eyes and head pose to derive information about the awareness or drowsiness of the driver. Other applications of such camera systems include the computation of eye gaze, i.e. where the driver is looking at. Such information is not only relevant for safety, but also for comfort features, such as selecting content on an infotainment system just by looking at things. Such camera-based systems require a camera or an image sensor to be mounted on the vehicle.

A common mounting position of such a camera or image sensor is on the steering wheel column of a vehicle. This position offers a good view on the driver's face and eyes. However, as the steering wheel position and/or the steering wheel column can be adjusted to fit different driver sizes and preferences, the camera can be moveable together with the steering wheel column. For example, the steering wheel and the steering wheel column can be adjusted electronically or mechanically in forward/backward and/or upward/downward directions.

For various applications the relative and/or absolute position of the camera and/or its orientation within the vehicle are required in order to map objects from a camera coordinate system to a vehicle coordinate system. One example is the accurate localization of the driver's head position with respect to the vehicle coordinate system. In other words, the location of the camera needs to be known in order to reliably derive spatial, i.e. positional data from the images which are captured by means of the camera. If the camera location is not known the spatial data can only be determined relative to the camera, but not in relation to other coordinate systems or elements. For example, the viewing direction of a person cannot be precisely matched with elements inside or outside the car without having reliable information about the sensor position and/or orientation.

US 2016/0018889 A1 discloses an eye-tracking system in a vehicle comprising an illuminator that directs infrared light towards a detection region wherein a controller is configured to detect a calibration target provided at a known location within the vehicle and to detect or determine changes in the position and/or orientation of a camera of the eye-tracking system relative to the calibration target

US 2016/0267336 A1 discloses a method for calibrating a camera for a gaze direction detection in a vehicle.

US 2017/0001648 A1 discloses a method and a device for detecting a save driving state of a driver. US 2016/0134863 A1 discloses a calibration for eye tracking systems in automotive environments.

In light of the foregoing it is desired to provide a method for localizing the camera. In particular, the camera may be localized with respect to a target coordinate system which is independent from the coordinate system of the camera. The target coordinate system can be, for example, a vehicle coordinate system. When the location of the camera is known spatial data can be precisely determined on the basis of images captured by the camera, for example the eye gaze and the position and/or orientation of the driver's head.

Some vehicles allow for an electronic adjustment of the steering wheel, while others have a purely mechanical mechanism to change the angle and distance of the steering wheel. While in the first approach it is theoretically possible to monitor the electronic adjustments and translate them into a change of the camera position from a reference position, in practice such information is not available in many cars (e.g. on the CAN bus). For example, one might only obtain the information that the steering wheel has been adjusted, however, not by how much. In the purely mechanical version, there is no such information at all.

Accordingly, there is a need to reliably localize a sensor mounted on a vehicle.

### SUMMARY

The present invention is defined in the independent claims. Preferred embodiment are set forth in the dependent claims.

In one aspect, the present invention is directed at a method for localizing an image sensor mounted on a vehicle as set out in claim 1.

The image sensor is configured to capture at least an eye portion of a passenger of the vehicle. In particular, the image sensor is configured to capture an eye movement of the passenger. For example, the image sensor is part of a vehicle system configured to monitor a level of awareness or a level of distraction of a driver of the vehicle and/or configured to control an infotainment system based on a detected viewing direction or gaze direction of the passenger. For this, the image sensor can be mounted on one of the following portions of the vehicle: a steering column, a steering wheel, a headrest of a vehicle seat, a backrest of a vehicle seat, an inner side of a roof or a pillar of a vehicle body.

The method comprises detecting, by means of the image sensor, at least one change of the passenger's viewing direction from a first viewing direction to a second viewing direction. In particular, the change of the viewing direction is detected when it is determined that a sudden and/or abrupt change of the passenger's viewing direction has occurred. For instance, the change of the viewing direction can be determined when the passenger has stared or gazed for a predetermined time period towards the first viewing direction before changing the gaze to the second viewing direction. In addition, the change in the passenger's viewing direction can be detected when the image sensor identifies at least one of the following: an eye movement, a head turn, a shoulder turn and/or a neck turn of the passenger.

The method further comprises detecting, by means of an environment sensor, at least one external object in an external environment of the vehicle. The external environment can be confined to an environment exterior to the vehicle and within a predetermined radial distance from the vehicle and/or within a predetermined angular section to the vehicle. The environment sensor is installed with and/or connected to the vehicle. The sensor can be designed as an optical sensor and/or a radar sensor and/or a lidar sensor. The sensor can correspond to a combination of different sensors of the vehicle. In particular, the environment sensor can be a component of a driver-assistance system of the vehicle. The environment sensor can be designed for example to detect the external objects as part of a control mechanism of the driver-assistance system.

In a next step, after their respective detection, it is determined whether the at least one detected change in the passenger's viewing direction and the at least one detected external object correlate in time. In other words, it is determined whether the change in the passenger's viewing direction is associated with an appearance of the external object in the external environment of the vehicle.

For each detected external object for which a time correlation with a change in the passenger's viewing direction is identified, the method comprises retrieving a spatial information of the detected external object. The spatial information can comprise a position and/or an orientation of the detected external object. The spatial information can comprise spatial information in relation to a relative reference system, such as a reference system of the vehicle and/or a reference system of the environment sensor. Alternatively or additionally, the spatial information can comprise spatial information in relation to an absolute reference system. For example, the spatial information comprises geographic coordinates and/or global positioning system (GPS) coordinates of the external object. The spatial information can be retrieved from the environment sensor itself and/or from a navigation system of the vehicle. For example, relative spatial information can be obtained from a measurement of the environment sensor wherein absolute spatial information can be obtained from GPS coordinates given by a map of the navigation system.

A location of the image sensor is determined based on the retrieved spatial information and the second viewing direction corresponding to the respective correlated change in the passenger's viewing direction. In other words, a position and/or location of the image sensor within the vehicle is calibrated and/or adjusted according to spatial information from external objects in the external environment of the vehicle. This allows for a more precise determination of the location of the image sensor compared to e.g. a localization based on objects located interior of the vehicle. For example, a higher variety of viewing directions of the passenger and therefore sampled points in space can be used for determining the location of the image sensor when using objects located outside the vehicle compared to when using objects located inside the vehicle.

As the environment sensor is usually precisely calibrated at a production stage and/or at an assembly stage with the vehicle, as it is the case in particular for a sensor designed for a driver-assistance system, the detection of the external objects and their corresponding spatial information is precise. Furthermore, using a gaze of the passenger on objects furtherly spaced from the vehicle than the interior objects of the vehicle allows determining the location of the image sensor with a higher signal-to-noise ratio. In conclusion, the method described herein allows determining a correct location and/or positioning of the image sensor within the vehicle in a reliable and precise manner.

According to an embodiment, the method comprises determining whether the at least one detected external object corresponds to a predetermined object and/or corresponds to an object present in a predetermined road traffic context. Before examining a possible time correlation between the detected external object and the detected change in the passenger's viewing direction, the detected external object may first be objected to a selection process. The selection process can comprise of comparing the detected external object to a list of predetermined objects. Alternatively or additionally, the selection process can comprise determining if the detected external object has been detected in and/or during a predetermined road traffic context. Only when the detected external object and a predetermined object match and/or a presence of the predetermined road traffic context has been detected, a selection of the detected external object occurs. Further steps of the method described herein can then only be executed with the selected external objects. This allows for introducing a plausibility criterion which plausibly examines whether the appearance of a particular external object can be the cause of the passenger changing his gaze. Therefore, by eliminating implausible correlations between the external object and the passenger's viewing directions, a fast computation of the location of the image sensor can be executed.

In particular, the predetermined object corresponds to one of the following objects: an overtaking vehicle, a passing-by vehicle, a parked vehicle, a pedestrian, traffic lights, a traffic sign, a billboard and/or a boom barrier.

In particular, the predetermined road traffic context corresponds to one of the following road traffic contexts: an overtake by another vehicle, a pass-by of another vehicle, an approach by another vehicle from a direction transverse to a direction of travel, a pass-by of a pedestrian, a change in traffic lights, an appearance of a traffic sign, an appearance of a billboard and/or a movement of a boom barrier.

According to an embodiment, the at least one change of the passenger's viewing direction is detected when a duration of the change from the first viewing direction to the second viewing direction is less than one second, preferably less than 500 milliseconds, most preferably less than 200 milliseconds. Additionally or alternatively, the at least one change of the passenger's viewing direction is detected when an angle between the first viewing direction and the second viewing direction is larger than 2 degrees, preferably larger than 5 degrees, most preferably larger than 10 degrees. By introducing at least one criterion for determining a change in the passenger's viewing direction, only those changes are used in further steps of the method, that allow to determine the location of the image sensor with a high signal-to-noise ratio and/or with a high precision.

According to an embodiment, the method comprises gathering the spatial information of a predetermined number of external objects for which a time correlation with a respective correlated change in the passenger's viewing direction has been identified and performing a statistical analysis on the gathered spatial information for localizing the image sensor. By using a predetermined number of external objects before a location of the image sensor will be determined, a point cloud of the detected external objects can be generated. In particular, the statistical analysis comprises eliminating invalid time correlations between the external objects and the respective correlated changes in the passenger's viewing direction. For example, a random sample consensus (RANSAC) algorithm can be performed as part of the statistical analysis.

According to an embodiment, localizing the image sensor comprises determining map parameters of the image sensor. The image sensor is configured to map a further captured viewing direction of the passenger on a map of the vehicle by means of the determined map parameters. In other words, a gaze and a resulting gaze vector of the passenger can be mapped on a model of the vehicle with the determined mapping parameters. The model can include the location of objects in the interior space of the vehicle, such as the location of an infotainment system. The map parameters can be determined, for example, by means of a bundle adjustment algorithm. In this way, it can reliably and precisely be determined at which object the passenger may be looking at. With this, a reliable functioning of a control of the infotainment system can be achieved.

In another aspect, the present invention is directed at a localization device for localizing an image sensor in a vehicle as set out in claim 12.

In another aspect, the present invention directed at a localization system as set out in claim 13.

It is understood that features described in connection with the method can be realized in the localization device as well as the localization system and vice versa.

In another aspect, the present disclosure is directed at a computer system, said computer system being configured to carry out several or all steps of the method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present invention is directed at a non-transitory computer readable medium as set out in claim 14. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

It is understood that features described in connection with the method can be realized in the computer system as well as the non-transitory computer readable medium and vice versa.

### DRAWINGS

Exemplary embodiments and functions of the present disclosure are described herein in conjunction with the following drawings, showing schematically:
- Fig. 1: a schematic illustration of a localization system for localizing an image sensor in a vehicle;
- Fig. 2: a schematic diagram of a method for localizing an image sensor in a vehicle;
- Fig. 3a: a schematic illustration of an exemplary road traffic context in a first instant of time;
- Fig. 3b: a schematic illustration of a map of the road traffic context shown in Fig. 3a;
- Fig. 3c: a schematic illustration of the exemplary road traffic context shown in Fig. 3a in a second instant of time;
- Fig. 3d: a schematic illustration of a map of the road traffic context shown in Fig. 3c;
- Fig. 4a: a schematic illustration of a further exemplary road traffic context in a first instant of time;
- Fig. 4b: a schematic illustration of a map of the road traffic context shown in Fig. 4a;
- Fig. 4c: a schematic illustration of the exemplary road traffic context shown in Fig. 4a in a second instant of time; and
- Fig. 4d: a schematic illustration of a map of the road traffic context shown in Fig. 4c.

### DETAILED DESCRIPTION

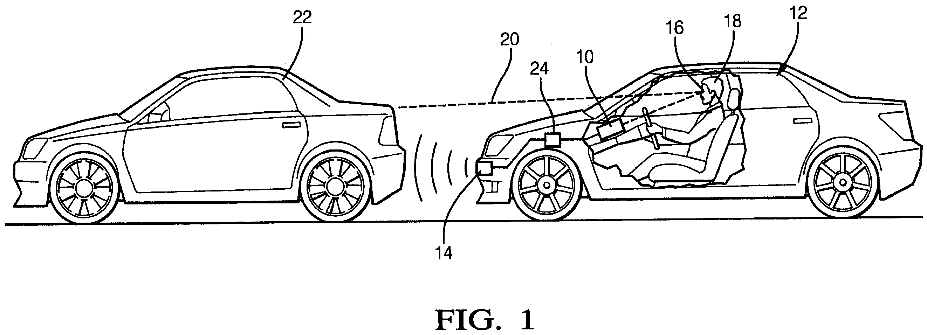

Fig. 1 illustrates aspects of a localization system for carrying out a method for localizing an image sensor 10 of a vehicle 12 by means of an environment sensor 14. The localization system comprises the image sensor 10 which is configured to capture at least an eye portion 16 of a passenger respectively driver 18 of the vehicle 12. For this, the image sensor 10 is mounted on a steering column (not shown) of the vehicle 12 and pointed towards the eye portion 16 of the driver 18. The image sensor 10 is for example designed as a driver monitoring camera and used for determining a level of distraction and/or awareness of the driver 18. As another example, the image sensor 10 is used for determining where the driver is looking at. In either case, the image sensor 10 determines from observing the eyes or the eye's movement a gaze or viewing direction 20 of the passenger 18. With this, it can be determined which object the driver 18 may be looking at, such as objects interior to the vehicle 12 and/or external objects in the external environment of vehicle 12. As shown by fig. 1, the viewing direction 20 of the driver 18 is currently directed at another vehicle 22 in front of the vehicle 12.

The localization system further comprises the environment sensor 14, which corresponds to a sensor or a combination of multiple sensors designed for a driver-assistance system of the vehicle 12. The environment sensor 14 is designed to detect external objects 22 in the environment of the vehicle 12, for example via a 360 degree radar or a lidar.

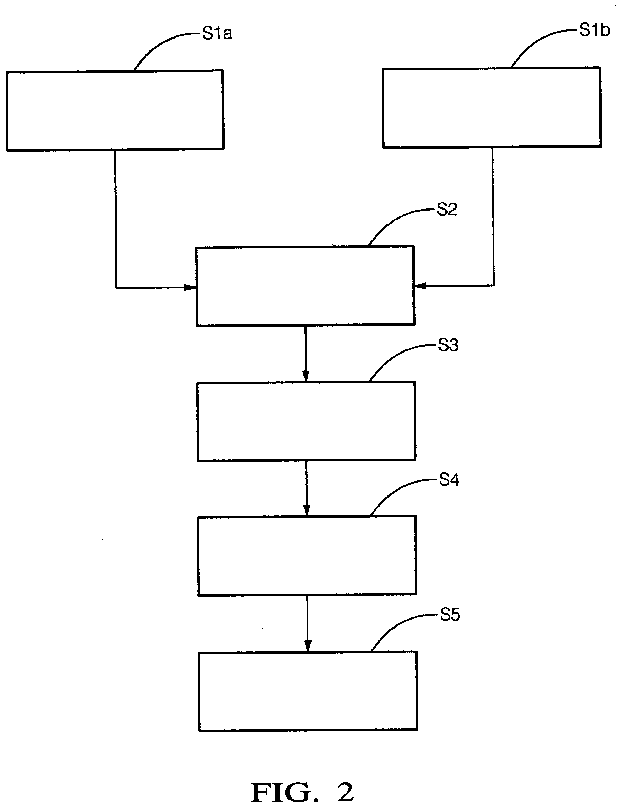

For determining the viewing direction 20 of the driver 18, it is important that the image sensor 10 is calibrated in regards to its position within the vehicle 12 and/or in regards to an absolute frame reference. In order to precisely locate the image sensor 10 in a reference frame of the vehicle 12 and/or in an absolute reference frame, such as a geographical space frame, the localization system further comprises a processing unit 24 configured to carry out a method for localizing the image sensor 10, as shown by fig. 2. In order to carry out this method, the processing unit 24 receives input from the image sensor 10 as well as from the environment sensor 14.

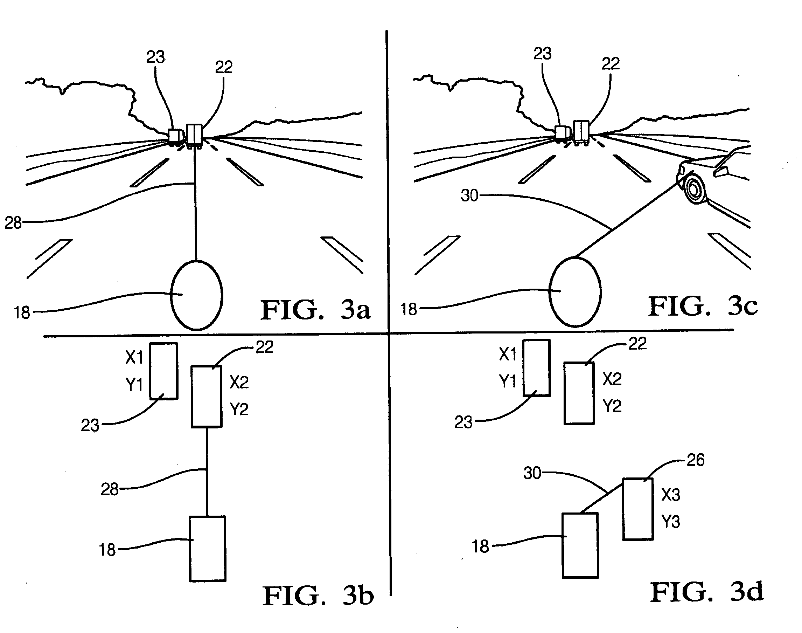

Fig. 2 shows schematically the steps of the method for localizing the image sensor 10 in the vehicle 12. In a step S1a, the image sensor 10 detects a change of the driver's viewing direction 20. The change is sudden and/or abrupt and can be determined to occur in a certain road traffic context, such as in the context of an overtaking vehicle on a roadway. Such an example is shown by figs. 3a and 3c, where the driver 18 gazes at the preceding vehicle 22 for a certain amount of time, as shown by fig. 3a, and may suddenly change his gaze to an overtaking vehicle 26 on the right side of the roadway, as shown by fig. 3c. The image sensor 10 can determine by observing an eye movement of the driver 18 that the viewing direction 20 of the driver 18 has changed from a first viewing direction 28, as shown by fig. 3a, to a second viewing direction 30, as shown by fig. 3c. For this, the image sensor can use a first rough estimation of the position of the image sensor 10 within the vehicle before its position is being calibrated.

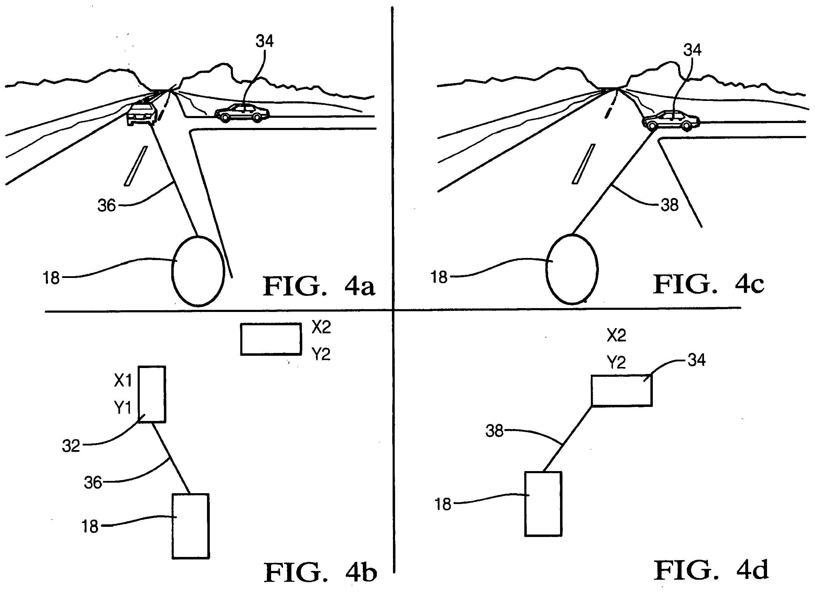

Another example for a road traffic context is shown by figs. 4a and 4c. The vehicle 12 is approaching a road intersection, wherein the driver 18 first focuses on a vehicle 32 passing by on the opposite lane of the road and then, with the approach of the intersection, looks at a vehicle 34 on the road at the right side of the intersection. The image sensor 10 can determine from the eye movement of the driver 18 that a viewing direction has changed from a first viewing direction 36 directed at the vehicle 32 to a second viewing direction 38 directed at the vehicle 34.

However, the image sensor 10 cannot determine on its own where the viewing directions 28, 30, 36 and 38 of the driver 18 are pointed to. For this, in a step S1b, the environment sensor 14 of the vehicle 12 detects predetermined road situations and/or predetermined road traffic contexts which are likely to attract the attention of the driver 18, such as an overtaking, a passing-by or sudden stops of other vehicles in the vicinity of the vehicle 12. The environment observed by the environment sensor 14 can be mapped on a situational awareness map for purposes of functions of the driver-assistance system. Such a mapping of external objects in the environment of the vehicle 12 is shown by figs. 3b, 3d, 4b and 4d, where the respective vehicles 22, 23, 26, 32 and 34 are shown on the situational awareness map depending on the current road traffic context. By using the map, the change in the road traffic situation can be easily detected.

The steps S1a and S1b occur independently of each other. The input of the image sensor 10 about a detected change in the viewing direction 20 of the driver 18 as well as the input of the environment sensor 14 about detecting a predetermined external object 26, 34 or a predetermined traffic context cause the processing unit 24 to examine whether a time correlation can be found between these two inputs in a step S2. If the time correlation is valid, the respective coordinates of the detected external objects 26 and 34 are retrieved from the situational awareness map and their correlation with the detected second viewing direction 30 and 38 are stored in a step S3.

Once a predetermined number of samples regarding detected external objects 26, 34 correlated with corresponding second viewing directions 30, 38 are stored, a statistical analysis, as for example an analysis using a random sample consensus (RANSAC) algorithm, is performed on the samples in a step S4 in order to eliminate and delete invalid correspondences between detected external objects and detected matching viewing directions from the stored samples. In a final step S5, a bundle adjustment algorithm is used on the stored samples, computing map parameters of the image sensor 10 that allow to precisely map further observed viewing directions 20 of the image sensor 10 in a reference frame of the vehicle 12.

### Reference numeral list

- 10: image sensor
- 12: vehicle
- 14: environment sensor
- 16: eye portion
- 18: driver
- 20: viewing direction
- 22: vehicle
- 23: vehicle
- 24: processing unit
- 26: vehicle
- 28: first viewing direction
- 30: second viewing direction
- 32: vehicle
- 34: vehicle
- 36: first viewing direction
- 38: second viewing direction

## Claims

1. A method for localizing an image sensor (10) mounted on a vehicle (12), the image sensor (10) being configured to capture at least an eye portion (16) of a passenger (18) of the vehicle (12),
the method being **characterized by**:
- detecting (S1a), by means of the image sensor (10), at least one change of a passenger's viewing direction (20) from a first viewing direction (28, 36) to a second viewing direction (30, 38);
- detecting (S1b), by means of an environment sensor (14) of the vehicle (12), at least one external object (26, 34) in an external environment of the vehicle (12), wherein the at least one external object (26, 34) is an object appearing in the external environment of the vehicle (12) and/or an object present in a predetermined road traffic context;
- determining (S2) whether the at least one detected change in the passenger's viewing direction (20) and the at least one detected external object (22, 23, 26, 32, 34) correlate in time , and for each detected external object (26, 34) for which a time correlation with a respective change in the passenger's
viewing direction (20) is identified:
- retrieve a spatial information of the external object (26, 34); and
- localize the image sensor (10) within the vehicle (12) on the basis of the retrieved spatial information and the second viewing direction (30, 38) corresponding to the respective time correlated change in the passenger's viewing direction (20).

2. The method of claim 1,
wherein the method further comprises determining whether the at least one detected external object (22, 23, 26, 32, 34) corresponds to a predetermined object.

3. The method of claim 2,
wherein the predetermined road traffic context corresponds to one of the following road traffic contexts: an overtake by another vehicle, a pass-by of another vehicle, an approach by another vehicle from a direction transverse to a direction of travel, a pass-by of a pedestrian, a change in traffic lights, an appearance of a traffic sign, an appearance of a billboard and/or a movement of a boom barrier.

4. The method according to any one of the preceding claims,
wherein the at least one change of the passenger's viewing direction (20) is detected when a duration of the change from the first viewing direction (28, 36) to the second viewing direction (30, 38) is less than one second, preferably less than 500 milliseconds, most preferably less than 200 milliseconds and/or wherein the at least one change of the passenger's viewing direction (20) is detected when an angle between the first viewing direction (28, 36) and the second viewing direction (30, 38) is larger than 2 degrees, preferably larger than 5 degrees, most preferably larger than 10 degrees.

5. The method according to any one of the preceding claims,
wherein the at least one change of the passenger's viewing direction (20) is detected by identifying an eye movement and/or a head turn and/or a shoulder turn and/or a neck turn of the passenger (18).

6. The method according to any one of the preceding claims,
wherein the method comprises gathering the spatial information of a predetermined number of external objects (26, 34) for which a time correlation with a respective correlated change in the passenger's viewing direction (20) has been identified and performing a statistical analysis on the gathered spatial information for localizing the image sensor (10) (step S3).

7. The method according to claim 6,
wherein the statistical analysis comprises eliminating invalid time correlations between the external objects (26, 34) and the respective correlated changes in the passenger's viewing direction (20) (step S4).

8. The method according to any one of the preceding claims,
wherein localizing the image sensor (10) comprises determining map parameters of the image sensor (10), in particular by means of a bundle adjustment algorithm, wherein the image sensor (10) is configured to map a further captured viewing direction of the passenger (18) on a model of the vehicle (12) by means of the determined map parameters (step S5).

9. The method according to any one of the preceding claims,
wherein the spatial information of the at least one external object (26, 34) comprises a position and/or an orientation of the detected external object (26, 34).

10. The method according to any one of the preceding claims,
wherein the spatial information of the at least one external object (26, 34) comprises a relative spatial information, preferably coordinates relative to a coordinate system of the environment sensor (14) and/or coordinates relative to a coordinate system of the vehicle (12), and/or an absolute spatial information, preferably geographic coordinates and/or global positioning system coordinates.

11. The method according to any one of the preceding claims,
wherein the environment sensor (14) is a component of a driver-assistance system of the vehicle (12).

12. A localization device for localizing an image sensor (10) mounted on a vehicle (12), the localization device comprising:
- a first input for receiving at least one information about a detected change of a viewing direction (20) of a passenger (18) of the vehicle (12) from the image sensor (10);
- a second input for receiving at least one information about a detected external object (26, 34) in an external environment of the vehicle (12) from an environment sensor (14) of the vehicle (12), wherein the detected external object (26, 34) is an object appearing in the external environment of the vehicle (12) and/or an object present in a predetermined road traffic context; and
- a processing unit (24) configured to determine a location of the image sensor (10) within the vehicle (12) by carrying out the method of one of claims 1 to 11.

13. A localization system comprising the localization device according to claim 12,
wherein the localization system comprises the image sensor (10) and the environment sensor (14).

14. A non-transitory computer readable medium comprising instructions, which when executed by the processing unit (24) of the localization device of claim 12, cause the processing unit (24) to carry out the method of one of claims 1 to 11.

## Patentansprüche

1. Verfahren zur Lokalisierung eines an einem Fahrzeug (12) angebrachten Bildsensors (10), wobei der Bildsensor (10) ausgestaltet ist, um zumindest einen Augenabschnitt (16) eines Insassen (18) des Fahrzeugs (12) zu erfassen,
wobei das Verfahren **dadurch gekennzeichnet ist, dass**:
- mittels des Bildsensors (10) zumindest eine Änderung einer Blickrichtung (20) des Insassen von einer ersten Blickrichtung (28, 36) zu einer zweiten Blickrichtung (30, 38) detektiert wird (S1a);
- mittels eines Umgebungssensors (14) des Fahrzeugs (12) zumindest ein externes Objekt (26, 34) in einer externen Umgebung des Fahrzeugs (12) detektiert wird (S1b), wobei das zumindest eine externe Objekt (26, 34) ein Objekt, das in der externen Umgebung des Fahrzeugs (12) auftaucht, und/oder ein Objekt, das in einem vorbestimmten Straßenverkehrskontext vorhanden ist, ist;
- ermittelt wird (S2), ob die zumindest eine detektierte Änderung der Blickrichtung (20) des Insassen und das zumindest eine detektierte externe Objekt (22, 23, 26, 32, 34) zeitlich in Korrelation stehen, und für jedes detektierte externe Objekt (26, 34), für das eine zeitliche Korrelation mit einer jeweiligen Änderung der Blickrichtung (20) des Insassen identifiziert wird:
- eine räumliche Information des externen Objekts (26, 34) abgerufen wird; und
- der Bildsensor (10) innerhalb des Fahrzeugs (12) auf der Grundlage der abgerufenen räumlichen Information und der zweiten Blickrichtung (30, 38) entsprechend der jeweiligen zeitlich in Korrelation stehenden Änderung der Blickrichtung (20) des Insassen lokalisiert wird.

2. Verfahren nach Anspruch 1,
wobei das Verfahren ferner umfasst, dass ermittelt wird, ob das zumindest eine detektierte externe Objekt (22, 23, 26, 32, 34) einem vorbestimmten Objekt entspricht.

3. Verfahren nach Anspruch 2,
wobei der vorbestimmte Straßenverkehrskontext einem der folgenden Straßenverkehrskontexte entspricht: einem Überholen durch ein anderes Fahrzeug, einem Vorbeifahren an einem anderen Fahrzeug, einem sich Nähern eines anderen Fahrzeugs von einer Richtung quer zu einer Fahrtrichtung, einem Vorbeifahren an einem Fußgänger, einer Änderung einer Ampel, einem Auftauchen eines Verkehrsschilds, einem Auftauchen einer Reklametafel und/oder einer Bewegung einer Schranke.

4. Verfahren nach einem der vorstehenden Ansprüche,
wobei die zumindest eine Änderung der Blickrichtung (20) des Insassen detektiert wird, wenn eine Dauer der Änderung von der ersten Blickrichtung (28, 36) zu der zweiten Blickrichtung (30, 38) kleiner als eine Sekunde, vorzugsweise kleiner als 500 Millisekunden, am stärksten bevorzugt kleiner als 200 Millisekunden ist, und/oder wobei die zumindest eine Änderung der Blickrichtung (20) des Insassen detektiert wird, wenn ein Winkel zwischen der ersten Blickrichtung (28, 36) und der zweiten Blickrichtung (30, 38) größer als 2 Grad, vorzugsweise größer als 5 Grad, am stärksten bevorzugt größer als 10 Grad ist.

5. Verfahren nach einem der vorstehenden Ansprüche,
wobei die zumindest eine Änderung der Blickrichtung (20) des Insassen durch Identifizieren einer Augenbewegung und/oder eines Drehens des Kopfes und/oder eines Drehens der Schulter und/oder eines Drehens des Halses des Insassen (18) detektiert wird.

6. Verfahren nach einem der vorstehenden Ansprüche,
wobei das Verfahren umfasst, dass die räumliche Information einer vorbestimmten Anzahl von externen Objekten (26, 34), für die eine zeitliche Korrelation mit einer jeweiligen in Korrelation stehenden Änderung der Blickrichtung (20) des Insassen identifiziert wurde, gesammelt wird und eine statistische Analyse hinsichtlich der gesammelten räumlichen Information durchgeführt wird, um den Bildsensor (10) zu lokalisieren (Schritt S3).

7. Verfahren nach Anspruch 6,
wobei die statistische Analyse umfasst, dass ungültige zeitliche Korrelationen zwischen den externen Objekten (26, 34) und den jeweiligen in Korrelation stehenden Änderungen der Blickrichtung (20) des Insassen beseitigt werden (Schritt S4).

8. Verfahren nach einem der vorstehenden Ansprüche,
wobei das Lokalisieren des Bildsensors (10) umfasst, dass Abbildungsparameter des Bildsensors (10), insbesondere mittels eines Bündelausgleichungsalgorithmus, ermittelt werden, wobei der Bildsensor (10) ausgestaltet ist, um eine weitere erfasste Blickrichtung des Insassen (18) auf ein Modell des Fahrzeugs (12) mittels der ermittelten Abbildungsparameter abzubilden (Schritt S5).

9. Verfahren nach einem der vorstehenden Ansprüche,
wobei die räumliche Information hinsichtlich des zumindest einen externen Objekts (26, 34) eine Position und/oder eine Ausrichtung des detektierten externen Objekts (26, 34) umfasst.

10. Verfahren nach einem der vorstehenden Ansprüche,
wobei die räumliche Information des zumindest einen externen Objekts (26, 34) eine relative räumliche Information, vorzugsweise Koordinaten relativ zu einem Koordinatensystem des Umgebungssensors (14) und/oder Koordinaten relativ zu einem Koordinatensystem des Fahrzeugs (12), und/oder eine absolute räumliche Information, vorzugsweise geografische Koordinaten und/oder Koordinaten eines globalen Positionsbestimmungssystems, umfasst.

11. Verfahren nach einem der vorstehenden Ansprüche,
wobei der Umgebungssensor (14) eine Komponente eines Fahrerassistenzsystems des Fahrzeugs (12) ist.

12. Lokalisierungseinrichtung zur Lokalisierung eines an einem Fahrzeug (12) angebrachten Bildsensors (10), wobei die Lokalisierungseinrichtung umfasst:
- einen ersten Eingang zum Empfangen zumindest einer Information hinsichtlich einer detektierten Änderung einer Blickrichtung (20) eines Insassen (18) des Fahrzeugs (12) von dem Bildsensor (10);
- einen zweiten Eingang zum Empfangen zumindest einer Information hinsichtlich eines detektierten externen Objekts (26, 34) in einer externen Umgebung des Fahrzeugs (12) von einem Umgebungssensor (14) des Fahrzeugs (12), wobei das detektierte externe Objekt (26, 34) ein Objekt, das in der externen Umgebung des Fahrzeugs (12) auftaucht, und/oder ein Objekt, das in einem vorbestimmten Straßenverkehrskontext vorhanden ist, ist; und
- eine Verarbeitungseinheit (24), die ausgestaltet ist, um einen Ort des Bildsensors (10) innerhalb des Fahrzeugs (12) durch Ausführen des Verfahrens nach einem der Ansprüche 1 bis 11 zu ermitteln.

13. Lokalisierungssystem, umfassend die Lokalisierungseinrichtung nach Anspruch 12,
wobei das Lokalisierungssystem den Bildsensor (10) und den Umgebungssensor (14) umfasst.

14. Nichttransitorisches von einem Computer lesbares Medium, umfassend Anweisungen, die bei einer Ausführung durch die Verarbeitungseinheit (24) der Lokalisierungseinrichtung nach Anspruch 12 bewirken, dass die Verarbeitungseinheit (24) das Verfahren nach einem der Ansprüche 1 bis 11 ausführt.

## Revendications

1. Procédé de localisation d'un capteur d'images (10) monté sur un véhicule (12), le capteur d'images (10) étant configuré pour capturer au moins une partie des yeux (16) d'un passager (18) du véhicule (12), le procédé étant **caractérisé par** les étapes consistant à :
- détecter (S1a), au moyen du capteur d'images (10), au moins un changement de la direction de vision (20) d'un passager d'une première direction de vision (28, 36) à une seconde direction de vision (30, 38) ;
- détecter (S1b), au moyen d'un capteur d'environnement (14) du véhicule (12), au moins un objet externe (26, 34) dans un environnement externe du véhicule (12), dans lequel ledit au moins un objet externe (26, 34) est un objet apparaissant dans l'environnement externe du véhicule (12) et/ou un objet présent dans un contexte de circulation routière prédéterminé ;
- déterminer (S2) si ledit au moins un changement détecté dans la direction de vision du passager (20) et ledit au moins un objet externe détecté (22, 23, 26, 32, 34) sont corrélés dans le temps, et pour chaque objet externe détecté (26, 34) pour lequel une corrélation temporelle avec un changement respectif dans la direction de vision du passager (20) est identifiée :
- récupérer des informations spatiales de l'objet externe (26, 34) ; et
- localiser le capteur d'images (10) à l'intérieur du véhicule (12) sur la base des informations spatiales récupérées et de la seconde direction de vision (30, 38) correspondant au changement corrélé dans le temps respectif de la direction de vision du passager (20).

2. Procédé selon la revendication 1,
dans lequel le procédé comprend en outre l'étape consistant à déterminer si ledit au moins un objet externe détecté (22, 23, 26, 32, 34) correspond à un objet prédéterminé.

3. Procédé selon la revendication 2,
dans lequel le contexte de circulation routière prédéterminé correspond à l'un des contextes de circulation routière suivants : un dépassement par un autre véhicule, un passage d'un autre véhicule, une approche par un autre véhicule depuis une direction transversale à une direction de déplacement, un passage d'un piéton, un changement de feux de circulation, une apparition d'un panneau de signalisation, une apparition d'un panneau d'affichage et/ou un mouvement d'une barrière levante.

4. Procédé selon l'une quelconque des revendications précédentes,
dans lequel ledit au moins un changement de la direction de vision du passager (20) est détecté lorsqu'une durée du passage de la première direction de vision (28, 36) à la seconde direction de vision (30, 38) est inférieure à une seconde, de préférence inférieure à 500 millisecondes, plus préférablement inférieure à 200 millisecondes et/ou dans lequel ledit au moins un changement de la direction de vision du passager (20) est détecté lorsqu'un angle entre la première direction de vision (28, 36) et la seconde direction de vision (30, 38) est supérieur à 2 degrés, de préférence supérieur à 5 degrés, plus préférablement supérieur à 10 degrés.

5. Procédé selon l'une quelconque des revendications précédentes,
dans lequel ledit au moins un changement de la direction de vision du passager (20) est détecté en identifiant un mouvement des yeux et/ou une rotation de la tête et/ou une rotation des épaules et/ou une rotation du cou du passager (18).

6. Procédé selon l'une quelconque des revendications précédentes,
dans lequel le procédé comprend l'étape consistant à collecter les informations spatiales d'un nombre prédéterminé d'objets externes (26, 34) pour lesquels une corrélation temporelle avec un changement corrélé respectif dans la direction de vision du passager (20) a été identifiée et à effectuer une analyse statistique sur les informations spatiales collectées pour localiser le capteur d'images (10) (étape S3).

7. Procédé selon la revendication 6,
dans lequel l'analyse statistique comprend l'étape consistant à éliminer des corrélations temporelles invalides entre les objets externes (26, 34) et les changements corrélés respectifs dans la direction de vision du passager (20) (étape S4).

8. Procédé selon l'une quelconque des revendications précédentes,
dans lequel la localisation du capteur d'images (10) comprend l'étape consistant à déterminer des paramètres cartographiques du capteur d'images (10), en particulier au moyen d'un algorithme de compensation par gerbes, dans lequel le capteur d'images (10) est configuré pour cartographier une autre direction de vision capturée du passager (18) sur un modèle du véhicule (12) au moyen des paramètres cartographiques déterminés (étape S5).

9. Procédé selon l'une quelconque des revendications précédentes,
dans lequel les informations spatiales dudit au moins un objet externe (26, 34) comprennent une position et/ou une orientation de l'objet externe détecté (26, 34).

10. Procédé selon l'une quelconque des revendications précédentes,
dans lequel les informations spatiales dudit au moins un objet externe (26, 34) comprennent des informations spatiales relatives, de préférence des coordonnées relatives à un système de coordonnées du capteur d'environnement (14) et/ou des coordonnées relatives à un système de coordonnées du véhicule (12), et/ou des informations spatiales absolues, de préférence des coordonnées géographiques et/ou des coordonnées de système de positionnement global.

11. Procédé selon l'une quelconque des revendications précédentes,
dans lequel le capteur d'environnement (14) est un composant d'un système d'aide à la conduite du véhicule (12).

12. Dispositif de localisation pour localiser un capteur d'images (10) monté sur un véhicule (12), le dispositif de localisation comprenant :
- une première entrée pour recevoir au moins une information concernant un changement détecté d'une direction de vision (20) d'un passager (18) du véhicule (12) à partir du capteur d'images (10) ;
- une deuxième entrée pour recevoir au moins une information concernant un objet externe détecté (26, 34) dans un environnement externe du véhicule (12) à partir d'un capteur d'environnement (14) du véhicule (12), dans lequel l'objet externe détecté (26, 34) est un objet apparaissant dans l'environnement externe du véhicule (12) et/ou un objet présent dans un contexte de circulation routière prédéterminé ; et
- une unité de traitement (24) configurée pour déterminer une localisation du capteur d'images (10) à l'intérieur du véhicule (12) en mettant en œuvre le procédé selon l'une des revendications 1 à 11.

13. Système de localisation comprenant le dispositif de localisation selon la revendication 12,
dans lequel le système de localisation comprend le capteur d'images (10) et le capteur d'environnement (14).

14. Support lisible par ordinateur non transitoire comprenant des instructions qui, lorsqu'elles sont exécutées par l'unité de traitement (24) du dispositif de localisation selon la revendication 12, amènent l'unité de traitement (24) à mettre en œuvre le procédé selon l'une des revendications 1 à 11.
